# EUROPÄISCHE PATENTSCHRIFT

(11) **EP 0 902 418 B1**
(45) Veröffentlichungstag und Bekanntmachung des Hinweises auf die Patenterteilung: **22.10.2003**
(21) Anmeldenummer: 98115373.7
(22) Anmeldetag: 14.08.1998
(51) Int. Cl.: G10L 15/22

(54) **Verfahren und Einrichtung zum Steuern eines Ansagesystems durch Sprache**
Method and device for controlling an announcement system by speech
Procédé et dispositif de commande d'un système de diffusion d'annonces par la parole

(30) Priorität: 12.09.1997 DE 19740172
(43) Veröffentlichungstag der Anmeldung: 17.03.1999
(73) Patentinhaber: SIEMENS AKTIENGESELLSCHAFT, 80333 München (DE)
(72) Erfinder: Lucioni, Gonzalo, Dr.-Ing., 58454 Witten (DE)

(56) Entgegenhaltungen:
- EP-A- 0 522 725
- EP-A- 0 736 995
- US-A- 4 914 692
- US-A- 5 125 024
- US-A- 5 548 681

## Beschreibung

Spracherkennungssysteme ermöglichen es, benutzerfreundliche Dienste über öffentliche Kommunikationsnetze zu realisieren. So kann ein Benutzer eines sprachgesteuerten Ansagesystems über seine Spracheingabe beispielsweise Informationen abfragen, die in dem Ansagesystem gespeichert sind. Ferner kann er Transaktionen, z.B. Geldüberweisungen oder Bestellungen ausführen. Zwischen dem Benutzer und dem Ansagesystem findet dabei eine Mensch-Maschine-Kommunikation statt, die sich für den Benutzer um so bequemer und effektiver gestaltet, je besser sie in ihrem Ablauf einer Mensch-Mensch-Kommunikation angenähert ist. Eine Kommunikation zwischen Menschen zeichnet sich bekanntlich unter anderem dadurch aus, daß der eine Gesprächspartner auf die Information des anderen gezielt und gegebenenfalls mit Unterbrechung des Redeflusses antwortet. Darüber hinaus spricht bei einer Mensch-Mensch-Kommunikation in der Regel nur ein Gesprächspartner, so daß der andere das Gesagte registrieren kann.

Bei Informationsdiensten, die von sprachgesteuerten Ansagesystemen angeboten werden, sind die über die Ansage zu vermittelnden Informationen in einer Art Baumstruktur organisiert. Um die gewünschte Information zu erhalten, antwortet der Benutzer mit seiner Spracheingabe auf eine erste Ansage des Ansagesystems. In Abhängigkeit der Spracheingabe des Benutzers wählt das Ansagesystem die nächste Ansage aus einem sogenannten Ansage-Menü aus, das die Baumstruktur der gespeicherten Information wiederspiegelt. Der Benutzer kommuniziert mit gezielten Spracheingaben als Antwort auf die Ansagen des Ansage-Menüs solange mit dem Ansagesystem, bis dieses ihm die gewünschte Information liefert. Auf diese Weise kann die Zeit, die benötigt wird, um die gewünschte Information von dem Ansagesystem zu erhalten, vergleichsweise kurz gehalten werden.

Bei bekannten Ansagesystemen stellt es sich jedoch als Nachteil dar, daß der Benutzer bis zum Ende der jeweiligen Ansage warten muß, bis er die Spracheingabe und so die gewünschte Wahl innerhalb des Ansage-Menüs vornehmen darf, da das Ansagesystem mit der Ansage fortfährt, ohne die Spracheingabe des Benutzers zu registrieren. Bei gleichzeitig auftretender Ansage und Spracheingabe, auch "double talking" genannt, geht so ein Teil der von dem Benutzer aufgesprochenen Sprachinformation verloren, so daß die Kommunikation zwischen Benutzer und Ansagesystem gestört ist.

Derartige Kommunikationsstörungen treten bei bekannten Ansagesystemen häufig auf. So geht aus einem Feldversuch, wiedergegeben in "A voice-activated telephone exchange system and its field trial", S. Yamamoto, K. Takeda, N. Inone, S. Kuroiwa, M. Naitoh, Proceedings of 2nd IEEE Workshop on Interactive Voice Technology for Telecommunications Applications, Kyoto, Japan 26-27 Sept. 1994, Seiten 21 bis 26, hervor, daß über 60 % der Benutzer bereits vor dem Ende der Ansage mit dem Sprechen begonnen haben. Um die eben erläuterten Kommunikationsstörungen zu vermeiden, muß ein Ansagesystem in die Lage versetzt werden, während seiner Ansage auf die Spracheingabe des Benutzers zu reagieren.

Ein weiteres bekanntes Ansagesystem ist in der Patentschrift US-A-5548681 offenbart, bei dem ein Ansagesignal angepasst wird, wenn eine zeitliche Überlagerung von Ansage und Spracheingabe festgestellt wird.

Es ist Aufgabe der Erfindung, ein Verfahren und eine Einrichtung anzugeben, das bzw. die es dem Ansagesystem ermöglicht, mit hoher Effizienz zu arbeiten.

Die Erfindung löst diese Aufgabe durch ein Verfahren, bei dem durch eine Ansageeinrichtung eine Ansage in Form eines digitalen Ansagesignals erzeugt wird und eine Spracheingabe von einer Spracherkennungseinrichtung in Form eines digitalen Spracheingabesignals verarbeitet wird. Es wird eine zeitliche Überlagerung von Ansage und Spracheingabe erfaßt und das Ansagesignal mit einem ersten Dämpfungsfaktor gedämpft, wenn eine zeitliche Überlagerung von Ansage und Spracheingabe festgestellt wird.

Erfolgt bei dem erfindungsgemäßen Verfahren eine Spracheingabe während einer Ansage, so wird durch Dämpfen des Ansagesignals die Lautstärke der Ansage verringert. Der Benutzer nimmt die Verringerung in der Ansagelautstärke als Reaktion auf seine Spracheingabe wahr. Die Reaktion des Ansagesystems gibt ihm die Sicherheit, daß seine Spracheingabe von dem Ansagesystem registriert worden ist, so daß Mißverständnisse oder überflüssigerweise wiederholte Spracheingaben vermieden werden können. Dies erhöht die Effizienz, mit der die Kommunikation zwischen dem Ansagesystem und dem Benutzer vollzogen werden kann. Zudem kann die häufig anzutreffende Befangenheit des Benutzers in einer als unnatürlich empfundenen Mensch-Maschine-Kommunikation durch das erfindungsgemäße Verfahren gemildert werden, da der Benutzer die Verringerung der Ansagelautstärke auf seine Spracheingabe hin als natürlich empfindet. So entspricht es menschlichem Kommunikationsverhalten, daß ein Sprecher auf Umwelteinflüsse, insbesondere auf Äußerungen seines Gesprächspartners reagiert, indem seine Stimme leiser wird und sich so seine Aufmerksamkeit gegenüber seiner Umgebung erhöht. Auch dieser Aspekt der Erfindung wirkt einer möglichen Verwirrung des Benutzers entgegen und erhöht die Effizienz, mit der das Spracheingabesystem arbeitet.

In einer vorteilhaften Ausgestaltung der Erfindung wird die Dämpfung des Ansagesignals zurückgenommen, wenn die zeitlicher Überlagerung von Ansage und Spracheingabe innerhalb einer vorbestimmten Überwachungsdauer aufgehoben ist. Durch diese Maßnahme kann verhindert werden, daß das Ansagesystem beispielsweise auf nicht relevante Spracheingaben des Benutzers reagiert. Solche Spracheingaben können z.B. Hust- oder Räuspergeräusche oder laute Umgebungsgeräusche sein. Ferner können dies auch Spracheingaben sein, die der Benutzer nach kurzer Zeit wieder abbricht, da er sich z.B. versprochen hat. Während der vorbestimmten Überwachungsdauer befindet sich das Sprachansagesystem gleichsam in Bereitschaft, was dem Benutzer, wie oben erläutert, durch Absenken der Ansagelautstärke kenntlich gemacht wird, ohne seine Ansage unnötigerweise zu unterbrechen. Dies spart Zeit und sorgt für einen reibungslosen Ablauf der Mensch-Maschine-Kommunikation.

Vorteilhaft wird bei einer andauernden zeitlichen Überlagerung von Ansage und Spracheingabe das Ansagesignal nach Ablauf der vorbestimmten Überwachungsdauer mit einem zweiten Dämpfungsfaktor gedämpft, der größer als der erste Dämpfungsfaktor ist. Diese Weiterbildung der Erfindung gestattet es dem Benutzer, die Ansage durch seine Spracheingabe zum "Verstummen" zu bringen. Der Benutzer kann nun in Ruhe seine Spracheingabe vornehmen, ohne durch die Ansage gestört zu werden und der Gefahr ausgesetzt zu sein, sich beispielsweise zu versprechen.

In einer weiteren Ausgestaltung der Erfindung wird die entsprechend dem zweiten Dämpfungsfaktor gedämpfte Ansage unterbrochen und mit einem vorhergehenden Ansagesegment fortgesetzt, das vor Beginn der zeitlichen Überlagerung von Ansage und Spracheingabe angesagt worden ist, wenn das Spracheingabesignal von der Spracherkennungseinrichtung nicht erkannt wird. Durch dieses Merkmal der Erfindung ist es möglich, in dem sprachgesteuerten Ansagesystem gleichsam Rückfragen zu stellen, wenn die Spracheingaben beispielsweise zu undeutlich vorgenommen worden sind. Indem die Ansage ab einem vorhergehenden Ansagesegment, das beispielsweise ein zuletzt ohne Dämpfung angesagtes Wort oder angesagter Satz sein kann, wird einem Informationsverlust vorgebeugt. Dem Benutzer können gleichsam Rückfragen gestellt werden, wenn die Spracheingaben beispielsweise zu undeutlich vorgenommen worden sind. Auf diese Weise kann die Fehleranfälligkeit des Ansagesystems verringert und seine Verarbeitungsgeschwindigkeit erhöht werden.

Vorteilhaft wird die zeitliche Überlagerung von Ansage und Spracheingabe durch eine Detektoreinrichtung erfaßt, der das Ansagesignal und das Spracheingabesignal zugeführt werden und die eine Dämpfungsvorrichtung mit einem Detektorsignal ansteuert. Der Dämpfungsfaktor wird durch die Dämpfungsvorrichtung einem Multiplikationsglied zugeführt, welches das Ansagesignal mit den Dämpfungsfaktoren multipliziert. Die Ansageeinrichtung wird durch eine von der Dämpfungsvorrichtung angesteuerte Kontrolleinheit kontrolliert. Das Detektorsignal zeigt durch seine beiden Logikwerte an, ob sich Ansage und Spracheingabe momentan zeitlich überlagern oder nicht.

In einer vorteilhaften Weiterbildung der Erfindung wird der Dämpfungsvorrichtung durch die Spracherkennungseinrichtung ein Erkennungssignal zugeführt, wenn das Spracheingabesignal erkannt wird. Die entsprechend dem zweiten Dämpfungsfaktor gedämpfte Ansage wird nach Ablauf einer vorbestimmten Pausendauer unterbrochen und mit dem vorhergehenden Ansagesegment fortgesetzt, falls das Erkennungssignal der Dämpfungsvorrichtung innerhalb der vorbestimmten Pausendauer nicht zugeführt wird. Das erfindungsgemäße Verfahren kann in dieser Ausgestaltung vorteilhaft verwendet werden, wenn die Spracherkennungseinrichtung das Erkennen einer Spracheingabe, nicht jedoch eine fehlerhafte Spracheingabe anzeigt. Erkennt die Spracherkennungseinrichtung die Spracheingabe innerhalb der vorbestimmten Pausendauer nicht, so wird dies als eine fehlerhafte Spracheingabe gewertet, und die Spracheingabe wird mit dem vorhergehenden Ansagesegment fortgesetzt, das, wie oben erwähnt, beispielsweise ein einzelnes Wort sein kann.

Eine alternative Ausführungsform der Erfindung ist dadurch gegeben, daß der Dämpfungsvorrichtung durch die Spracherkennungseinrichtung ein Fehlersignal zugeführt wird, wenn das Spracheingabesignal als fehlerhaft erkannt wird. Die entsprechend dem hohen Dämpfungsfaktor gedämpfte Ansage wird unterbrochen und mit dem vorhergehenden Ansagesegment fortgesetzt, wenn der Dämpfungsvorrichtung das Fehlersignal zugeführt wird. Der Vorteil dieser Weiterbildung der Erfindung besteht darin, daß die Spracheingabe bei einem Fehler automatisch wiederholt wird, ohne auf das Verstreichen einer vorgegebenen Pausendauer warten zu müssen. Während in dem zuvor beschriebenen Ausführungsbeispiel neben einer ersten Zeitschaltung, die das Verstreichen der Überwachungsdauer kontrolliert, eine zweite Zeitschaltung zum Kontrollieren der Pausendauer vorgesehen sein kann, ist bei diesem Ausführungsbeispiel eine einzige Zeitschaltung in jedem Fall ausreichend.

Der erste Dämpfungsfaktor beträgt vorteilhaft etwa 12 dB. Der zweite Dämpfungsfaktor kann näherungsweise unendlich groß angesetzt werden.

In einer weiteren vorteilhaften Weiterbildung der Erfindung können die Dämpfungsfaktoren durch digitale Tiefpässe gefiltert werden. Mit dieser Maßnahme können Störgeräusche, z.B. Knackgeräusche, vermieden werden, die durch das Umschalten der Dämpfungsvorrichtung auf verschiedene Dämpfungsfaktoren entstehen können.

Gemäß einem weiteren Aspekt der Erfindung ist eine Einrichtung zum Durchführen des beschriebenen Verfahrens vorgesehen.

Weitere vorteilhafte Weiterbildungen der Erfindung sind Gegenstand der Unteransprüche sowie der folgenden Beschreibung.

Die Erfindung wird im folgenden an Hand der Figuren näher erläutert. Darin zeigen:
- Figur 1: ein Blockdiagramm eines sprachgesteuerten Ansagesystems und
- Figur 2: ein Ablaufdiagramm zum Nachahmen menschlichen Kommunikationsverhaltens in dem Ansagesystem nach Figur 1.

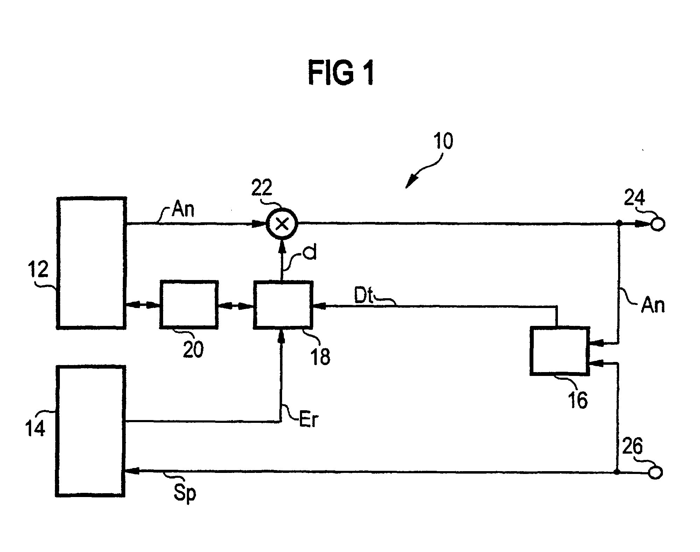

In Figur 1 ist ein sprachgesteuertes Ansagesystem 10 dargestellt, das eine Spracheingabe eines Benutzers während einer Ansage erlaubt. Das Ansagesystem 10 enthält eine Ansageeinrichtung 12, eine Spracherkennungseinrichtung 14, eine Detektoreinrichtung 16, eine Dämpfungsvorrichtung 18, eine, Kontrolleinheit 20 und ein Multiplikationsglied 22. Der Ansage liegt ein digitales Ansagesignal An zugrunde, das in bekannter Weise durch einen D-A-Wandler (nicht dargestellt) in ein analoges und dann in ein für den Benutzer hörbares Signal gewandelt wird. Die Ansageeinrichtung 12 führt das Ansagesignal An dem Multiplikationsglied 22 zu. Das Ansagesignal An wird in dem Multiplikationsglied 22 mit einem Dämpfungsfaktor d multipliziert und an einen Ausgang 24 des Ansagesystems 10 übertragen, über den die Ansage dem Benutzer zugeführt wird.

Aus der Spracheingabe des Benutzers wird durch A-D-Wandlung eines der Spracheingabe entsprechenden analogen Signals ein digitales Spracheingabesignal Sp erzeugt, das dem Ansagesystem 10 über einen Eingang 26 zugeführt wird. Das Ansagesignal An und das Spracheingabesignal Sp sind jeweils auf einen Eingang der Detektoreinrichtung 16 geführt, die ein gleichzeitiges Auftreten von Ansage und Spracheingabe erfaßt und ein Detektorsignal Dt an die Dämpfungsvorrichtung 18 ausgibt. Überlagern sich die Ansage und die Spracheingabe, so nimmt das Detektorsignal Dt den logischen Wert 1 an, andernfalls den logischen Wert 0.

Die Dämpfungsvorrichtung 18 wird in diesem Ausführungsbeispiel durch die Detektoreinrichtung 16 über das Detektorsignal Dt und durch die Spracherkennungseinrichtung 14 über ein später noch erläutertes Erkennungssignal Er angesteuert. Die Dämpfungsvorrichtung 18 ist auf verschiedene Dämpfungsfaktoren d umschaltbar und steuert so über den jeweiligen an das Multiplikationsglied 22 angelegten Dämpfungsfaktor d die Lautstärke der Ansage. Die Ansageeinrichtung 12 wird durch die mit der Dämpfungsvorrichtung 18 verbundene Kontrolleinheit 20 in noch zu erläuternder Weise angesteuert, so daß bei gleichzeitig auftretender Ansage und Spracheingabe menschliches Kommunikationsverhalten nachgebildet wird.

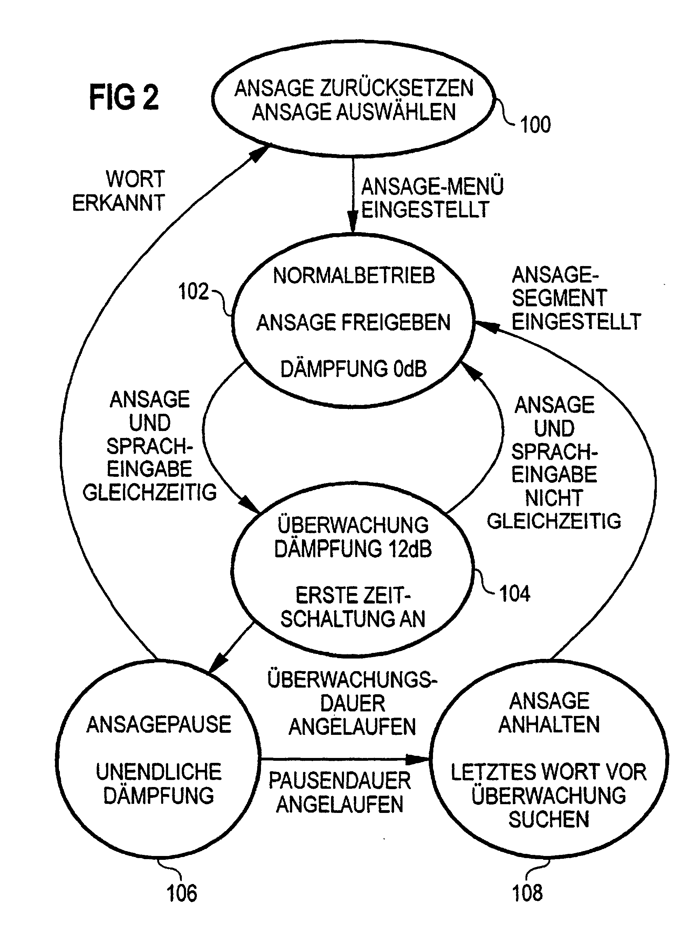

In Figur 2 ist erläutert, wie die Ansage in dem Ansagesystem 10 gesteuert wird. Im Verfahrensschritt 100 wird mittels einer Spracheingabe des Benutzers eine Ansage aus dem Ansage-Menü ausgewählt. Die Ansage wird im Schritt 102 freigegeben und das entsprechende Ansagesignal An ungedämpft, d.h. mit 0 dB an den Ausgang 24 des Ansagesystems 10 übertragen. Gleichzeitig wird von der Detektoreinrichtung 16 fortlaufend geprüft, ob der Benutzer dem Ansagesystem über den Eingang 26 eine Spracheingabe zuführt, d.h. ob Ansage und Spracheingabe gleichzeitig erfolgen. Solange dies nicht der Fall ist, hat das Detektorsignal Dt den logischen Wert 0, und das Ansagesignal An bleibt ungedämpft. Dies ist im Schritt 102 mit Normalbetrieb bezeichnet.

Erfolgt eine Spracheingabe des Benutzers während der Ansage, so steuert die Detektoreinrichtung 16 die Dämpfungsvorrichtung 18 mit dem logischen Wert 1 des Detektorsignals Dt an. Der Übergang des Detektorsignals Dt von 0 auf 1 entspricht in Figur 2 dem Übergang von Schritt 102 auf Schritt 104. Im Schritt 104 wird das gleichzeitige Auftreten von Ansage und Spracheingabe überwacht. Zu diesem Zweck stellt die schaltbare Dämpfungsvorrichtung 18 einen ersten Dämpfungsfaktor d von z.B. 12 dB ein. Zugleich wird in der Kontrolleinheit 20 eine erste, in den Figuren nicht dargestellte Zeitschaltung aktiviert, die auf eine vorgegebene Überwachungsdauer eingestellt ist. Wird innerhalb der Überwachungsdauer die Spracheingabe beendet, so geht das Detektorsignal von 1 auf 0 über, und die Dämpfungsvorrichtung 18 wird veranlaßt, wieder auf d 0 dB einzustellen. In Figur 2 entspricht dies dem Rücksprung von Schritt 104 auf Schritt 102.

Erfolgt jedoch während der Überwachungsdauer keine Spracheingabe, d.h. bleibt das Detektorsignal Dt auf dem logischen Wert 1, so wird nach Ablauf der Überwachungsdauer ein zweiter Dämpfungsfaktor d im Schritt 106 eingestellt, der z.B. näherungsweise unendlich groß sein kann, wodurch eine Pause in der Ansage erzeugt wird. In dem Ausführungsbeispiel nach Figur 2 wird zugleich eine zweite Zeitschaltung in der Kontrolleinheit 20 aktiviert, die auf eine vorgegebene Pausendauer eingestellt ist. Wird innerhalb dieser Pausendauer ein Wort der Spracheingabe von der Spracherkennungseinrichtung 14 erkannt, so gibt diese das Erkennungssignal Er an die Dämpfungsvorrichtung 18 ab. Durch das Erkennungssignal Er wird das Ansagesystem 10 in einen definierten Ausgangszustand zurückversetzt, in dem der Benutzer eine nächste Ansage aus dem Ansage-Menü auswählen kann. In Figur 2 entspricht dies dem Rücksprung nach Schritt 100.

Liefert die Spracherkennungseinrichtung der Dämpfungseinrichtung 18 das Erkennungssignal Er innerhalb der Pausendauer nicht, d.h. wird in dieser Zeit die Spracheingabe nicht erkannt, so hält die Kontrolleinheit 20 die Ansageeinrichtung nach Ablauf der Pausendauer im Schritt 108 an. Ferner wird die Ansageeinrichtung 12 von der Kontrolleinheit 20 veranlaßt, ein Ansagesegment, z.B. ein Wort oder einen Satz, einzustellen, das bzw. der vor Beginn der Spracheingabe, d.h. vor der zeitlichen Überlagerung von Ansage und Spracheingabe, angesagt worden ist. Das Ansagesegment ist in dem beschriebenen Ausführungsbeispiel das Wort, das als letztes vor der Überwachung, d.h. vor dem Umschalten des Dämpfungsfaktors d von 0 dB auf 12 dB, von der Ansageeinrichtung 12 angesagt worden ist. Es wird dann mit Schritt 102 fortgesetzt, in dem d auf 0 dB eingestellt und die Ansage freigegeben wird.

In dem eben besprochenen Ausführungsbeispiel gibt die Spracherkennungseinrichtung 14 das Erkennungssignal Er aus, wenn sie ein Wort der Spracheingabe erkannt hat. In diesem Fall ist, wie oben dargestellt, beispielsweise eine zweite Zeitschaltung vorzusehen, welche auf die Pausendauer eingestellt ist. Auf die zweite Zeitschaltung kann jedoch verzichtet werden, wenn in einer alternativen Ausführungsform die Spracherkennungseinrichtung 14 ein Fehlersignal ausgibt, falls sie die Spracheingabe nicht erkannt hat. Das Fehlersignal wird der Detektoreinrichtung 18 und der Kontrolleinheit 20 zugeführt, welche die Ansageeinrichtung 12 in Schritt 108 anhält und in oben beschriebener Weise das Ansagesegment einstellt, das vor der Überwachung angesagt worden ist.

Das stufenweise Variieren der Lautstärke der Ansage durch das Einstellen diskreter Werte des Dämpfungsfaktors d durch die Dämpfungsvorrichtung 18 kann sich u.U. in Störgeräuschen, z.B. Knackgeräuschen, äußern. Solche Störgeräusche können vermieden werden, wenn die vorgegebenen Dämpfungsfaktoren d in der Dämpfungsvorrichtung 18 mittels digitaler Tiefpässe gefiltert werden. Die stufige Wertvorgabe der Dämpfungsfaktoren d kann so durch eine kontinuierliche Sollwert-Funktion mit geeigneten Übergangszeiten für die jeweiligen Übergänge ersetzt werden.

## Patentansprüche

1. Verfahren zum Steuern eines Ansagesystems (10) durch Sprache,
bei dem durch eine Ansageeinrichtung (12) eine Ansage in Form eines digitalen Ansagesignals (An) erzeugt wird,
eine Spracheingabe von einer Spracherkennungseinrichtung (14) in Form eines digitalen Spracheingabesignals (Sp) verarbeitet wird,
eine zeitliche Überlagerung von Ansage und Spracheingabe erfaßt wird,
und bei dem das Ansagesignal (An) mit einem ersten Dämpfungsfaktor (d) gedämpft wird, wenn eine zeitliche Überlagerung von Ansage und Spracheingabe festgestellt wird,
wobei über den angelegten Dämpfungsfaktor die Lautstärke der Ansage gesteuert wird.

2. Verfahren nach Anspruch 1, **dadurch gekennzeichnet, daß** die Dämpfung des Ansagesignals (An) zurückgenommen wird, wenn die zeitliche Überlagerung von Ansage und Spracheingabe innerhalb einer vorbestimmten Überwachungsdauer aufgehoben ist.

3. Verfahren nach Anspruch 2, **dadurch gekennzeichnet, daß** bei einer andauernden zeitlichen Überlagerung von Ansage und Spracheingabe das Ansagesignal (An) nach Ablauf der vorbestimmten Überwachungsdauer mit einem zweiten Dämpfungsfaktor (d) gedämpft wird, der größer als der erste Dämpfungsfaktor (d) ist.

4. Verfahren nach Anspruch 3, **dadurch gekennzeichnet, daß** die entsprechend dem zweiten Dämpfungsfaktor (d) gedämpfte Ansage unterbrochen wird und mit einem vorhergehenden Ansagesegment, das vor Beginn der zeitlichen Überlagerung von Ansage und Spracheingabe angesagt worden ist, ungedämpft fortgesetzt wird, wenn das Spracheingabesignal (Sp) von der Spracherkennungseinrichtung (14) nicht erkannt wird.

5. Verfahren nach einem der vorhergehenden Ansprüche, **dadurch gekennzeichnet, daß** die zeitlicher Überlagerung von Ansage und Spracheingabe durch eine Detektoreinrichtung (16) erfaßt wird, der das Ansagesignal (An) und das Spracheingabesignal (Sp) zugeführt werden und die eine Dämpfungsvorrichtung (18) mit einem Detektorsignal (Dt) ansteuert,
die Dämpfungsfaktoren (d) durch die Dämpfungsvorrichtung (18) einem Multiplikationsglied zugeführt werden, welches das Ansagesignal (An) mit den Dämpfungsfaktoren (d) multipliziert,
und daß die Ansageeinrichtung (12) durch eine von der Dämpfungsvorrichtung (18) angesteuerte Kontrolleinheit (20) kontrolliert wird.

6. Verfahren nach einem der vorhergehenden Ansprüche, **dadurch gekennzeichnet, daß** der Dämpfungsvorrichtung (18) durch die Spracherkennungseinrichtung (14) ein Erkennungssignal (Er) zugeführt wird, falls das Spracheingabesignal (Sp) erkannt wird.

7. Verfahren nach Anspruch 6, **dadurch gekennzeichnet, daß** die entsprechend dem zweiten Dämpfungsfaktor (d) gedämpfte Ansage nach Ablauf einer vorbestimmten Pausendauer unterbrochen und mit dem vorhergehenden Ansagesegment fortgesetzt wird, wenn das Erkennungssignal (Er) der Dämpfungsvorrichtung (18) innerhalb der vorbestimmten Pausendauer nicht zugeführt wird.

8. Verfahren nach einem der Ansprüche 1 bis 6, **dadurch gekennzeichnet, daß** der Dämpfungsvorrichtung (18) durch die Spracherkennungseinrichtung (14) ein Fehlersignal zugeführt wird, wenn das Spracheingabesignal (Sp) als fehlerhaft erkannt wird.

9. Verfahren nach Anspruch 8, **dadurch gekennzeichnet, daß** die entsprechend dem zweiten Dämpfungsfaktor (d) gedämpfte Ansage unterbrochen und mit dem vorhergehenden Ansagesegment fortgesetzt wird, wenn der Dämpfungsvorrichtung (18) das Fehlersignal zugeführt wird.

10. Verfahren nach einem der vorhergehenden Ansprüche, **dadurch gekennzeichnet, daß** der erste Dämpfungsfaktor (d) etwa 12 dB beträgt.

11. Verfahren nach einem der vorhergehenden Ansprüche, **dadurch gekennzeichnet, daß** der zweite Dämpfungsfaktor näherungsweise unendlich groß ist.

12. Verfahren nach einem der vorhergehenden Ansprüche, **dadurch gekennzeichnet, daß** das Verstreichen der Überwachungsdauer durch eine erste Zeitschaltung kontrolliert wird.

13. Verfahren nach einem der Ansprüche 7, 10, 11 oder 12, **dadurch gekennzeichnet, daß** das Verstreichen der Pausendauer durch die erste Zeitschaltung oder eine zweite Zeitschaltung kontrolliert wird.

14. Verfahren nach einem der vorhergehenden Ansprüche, **dadurch gekennzeichnet, daß** die Dämpfungsfaktoren (d) durch digitale Tiefpässe gefiltert werden.

15. Einrichtung zum Durchführen des Verfahrens nach einem der Ansprüche 1 bis 14,
mit einer Ansageeinrichtung (12), die eine Ansage in Form eines digitalen Ansagesignals (An) erzeugt,
einer Spracherkennungseinrichtung (14), die eine Spracheingabe in Form eines digitalen Spracheingabesignals (Sp) verarbeitet,
einer Detektoreinrichtung (16), die eine zeitliche Überlagerung von Ansage und Spracheingabe erfaßt,
und mit einer Dämpfungsvorrichtung (18), die das Ansagesignal (An) mit einem ersten Dämpfungsfaktor (d) dämpft, wenn durch die Detektoreinrichtung (16) eine zeitliche Überlagerung von Ansage und Spracheingabe festgestellt wird,
wobei über den angelegten Dämpfungsfaktor die Lautstärke der Ansage gesteuert wird.

16. Einrichtung nach Anspruch 15, **dadurch gekennzeichnet, daß** die Dämpfungsvorrichtung (18) die Dämpfung des Ansagesignals (An) zurücknimmt, wenn die zeitliche Überlagerung von Ansage und Spracheingabe innerhalb einer vorbestimmten Überwachungsdauer aufgehoben ist.

17. Einrichtung nach Anspruch 16, **dadurch gekennzeichnet, daß** die Dämpfungsvorrichtung (18) das Ansagesignal bei einer andauernden zeitlichen Überlagerung von Ansage und Spracheingabe nach Ablauf der vorbestimmten Überwachungsdauer mit einem zweiten Dämpfungsfaktor (d) dämpft, der größer als der erste Dämpfungsfaktor ist.

18. Einrichtung nach Anspruch 17, **gekennzeichnet durch** eine Kontrolleinheit (20), welche die Ansageeinrichtung (14) veranlaßt, die entsprechend dem zweiten Dämpfungsfaktor gedämpfte Ansage zu unterbrechen und mit einem vorhergehenden Ansagesegment ungedämpft fortzusetzen, das vor Beginn der zeitlichen Überlagerung von Ansage und Spracheingabe **durch** die Ansageeinrichtung angesagt worden ist, wenn das Spracheingabesignal (Sp) von der Spracherkennungseinrichtung (14) nicht erkannt wird.

19. Einrichtung nach einem der Ansprüche 15 bis 18, **dadurch gekennzeichnet, daß** die Dämpfungsvorrichtung (18) mit einem Multiplikationsglied (22) verbunden ist, dem es die Dämpfungsfaktoren (d) zuführt.

20. Einrichtung nach einem der Ansprüche 15 bis 19, **dadurch gekennzeichnet, daß** die Kontrolleinheit (20) eine erste Zeitschaltung enthält.

21. Einrichtung nach Anspruch 20, **dadurch gekennzeichnet, daß** die Kontrolleinheit (20) eine zweite Zeitschaltung enthält.

22. Einrichtung nach einem der Ansprüche 15 bis 21, **gekennzeichnet durch** digitale Tiefpässe in der Dämpfungsvorrichtung (18), welche die Dämpfungsfaktoren (d) filtern.

## Claims

1. Method for the voice control of an announcement system (10), in which an announcement in the form of a digital announcement signal (An) is generated by an announcement device (12), a voice input is processed by a voice recognition device (14) in the form of a digital voice input signal (Sp), chronological overlapping of the announcement and voice input is sensed, and in which the announcement signal (An) is attenuated with a first attenuation factor (d) if chronological overlapping of the announcement and voice input is detected, the volume of the announcement being controlled by means of the applied attenuation factor.

2. Method according to Claim 1, **characterized in that** the attenuation of the announcement signal (An) is cancelled if the chronological overlapping of the announcement and voice input is eliminated within a predetermined monitoring period.

3. Method according to Claim 2, **characterized in that**, if there is persistent chronological overlapping of the announcement and voice input, the announcement signal (An) is attenuated after the expiry of the predetermined monitoring period, with a second attenuation factor (d) which is greater than the first attenuation factor (d).

4. Method according to Claim 3, **characterized in that** the announcement which is attenuated in accordance with the second attenuation factor (d) is interrupted and continued without attenuation with a preceding announcement segment which has been announced before the start of the chronological overlapping of the announcement and voice input, if the voice input signal (Sp) is not detected by the voice recognition device (14).

5. Method according to one of the preceding claims, **characterized in that** the chronological overlapping of the announcement and voice input is sensed by a detector device (16) to which the announcement signal (An) and the voice input signal (Sp) are fed and which actuates an attenuation device (18) with a detector signal (Dt), the attenuation factors (d) are fed by the attenuation device (18) to a multiplier element which multiplies the announcement signal (An) by the attenuation factors (d), and **in that** the announcement device (12) is checked by means of a control unit (20) which is actuated by the attenuation device (18).

6. Method according to one of the preceding claims, **characterized in that** a recognition signal (Er) is fed to the attenuation device (18) by the voice recognition device (14) if the voice input signal (Sp) is detected.

7. Method according to Claim 6, **characterized in that** the announcement which is attenuated in accordance with the second attenuation factor (d) is interrupted after the expiry of a predetermined interval period and continued with the preceding announcement segment if the recognition signal (Er) is not fed to the attenuation device (18) within the predetermined interval period.

8. Method according to one of Claims 1 to 6, **characterized in that** a fault signal is fed to the attenuation device (18) by the voice recognition device (14) if the voice input signal (Sp) is detected as being faulty.

9. Method according to Claim 8, **characterized in that** the announcement which is attenuated in accordance with the second attenuation factor (d) is interrupted and continued with the preceding announcement segment if the fault signal is fed to the attenuation device (18).

10. Method according to one of the preceding claims, **characterized in that** the first attenuation factor (d) is approximately 12 dB.

11. Method according to one of the preceding claims, **characterized in that** the second attenuation factor is approximately infinitely large.

12. Method according to one of the preceding claims, **characterized in that** the elapsing of the monitoring period is checked by a first timer circuit.

13. Method according to one of Claims 7, 10, 11 or 12, **characterized in that** the elapsing of the interval period is checked by the first timer circuit or a second timer circuit.

14. Method according to one of the preceding claims, **characterized in that** the attenuation factors (d) are filtered by digital low-pass filters.

15. Device for carrying out the method according to one of Claims 1 to 14, having an announcement device (12) which generates an announcement in the form of a digital announcement signal (An), a voice recognition device (14) which processes a voice input in the form of a digital voice input signal (Sp), a detector device (16) which senses chronological overlapping of the announcement and voice input, and having an attenuation device (18) which attenuates the announcement signal (An) with a first attenuation factor (d) if chronological overlapping of the announcement and voice input is detected by the detector device (16), the volume of the announcement being controlled by means of the applied attenuation factor.

16. Device according to Claim 15, **characterized in that** the attenuation device (18) cancels the attenuation of the announcement signal (An) if the chronological overlapping of the announcement and voice input is eliminated within a predetermined monitoring period.

17. Device according to Claim 16, **characterized in that**, if there is persistent chronological overlapping of the announcement and voice input, the attenuation device (18) attenuates the announcement signal after the expiry of the predetermined monitoring period, with a second attenuation factor (d) which is greater than the first attenuation factor.

18. Device according to Claim 17, **characterized by** a control unit (20) which causes the announcement device (14) to interrupt the announcement which is attenuated in accordance with the second attenuation factor, and to continue without attenuation with a preceding announcement segment which has been announced by the announcement device before the start of the chronological overlapping of the announcement and voice input, if the voice input signal (Sp) is not detected by the voice recognition device (14).

19. Device according to one of Claims 15 to 18, **characterized in that** the attenuation device (18) is connected to a multiplier element (22) to which it feeds the attenuation factors (d).

20. Device according to one of Claims 15 to 19, **characterized in that** the control unit (20) contains a first timer circuit.

21. Device according to Claim 20, **characterized in that** the control unit (20) contains a second timer circuit.

22. Device according to one of Claims 15 to 21, **characterized by** digital low-pass filters in the attenuation device (18), which filter the attenuation factors (d).

## Revendications

1. Procédé de commande d'un système de diffusion d'annonces (10) par la parole,
dans lequel une annonce est créée sous la forme d'un signal d'annonce numérique (An) au moyen d'un dispositif d'annonce (12),
une entrée vocale est traitée sous la forme d'un signal numérique d'entrée vocale (Sp) par un dispositif de reconnaissance vocale (14),
une superposition temporelle de l'annonce et de l'entrée vocale est enregistrée,
et dans lequel le signal d'annonce (An) est atténué au moyen d'un premier coefficient d'atténuation (d) lorsqu'une superposition temporelle de l'annonce et de l'entrée vocale est constatée, l'intensité sonore de l'annonce étant commandée par l'intermédiaire du coefficient d'atténuation appliqué.

2. Procédé suivant la revendication 1, **caractérisé en ce que** l'atténuation du signal d'annonce (An) est supprimée lorsque la superposition temporelle de l'annonce et de l'entrée vocale est annulée pendant une durée de surveillance prédéterminée.

3. Procédé suivant la revendication 2, **caractérisé en ce que**, en cas d'une superposition temporelle continue de l'annonce et de l'entrée vocale, le signal d'annonce (An), après expiration de la durée de surveillance prédéterminée, est atténué au moyen d'un deuxième coefficient d'atténuation (d) qui est supérieur au premier coefficient d'atténuation (d).

4. Procédé suivant la revendication 3, **caractérisé en ce que** l'annonce atténuée conformément au deuxième coefficient d'atténuation (d) est interrompue et est poursuivie, de manière non atténuée, avec un segment d'annonce précédent qui a été annoncé avant le début de la superposition temporelle de l'annonce et de l'entrée vocale, lorsque le signal d'entrée vocale (Sp) n'est pas reconnu par le dispositif de reconnaissance vocale (14).

5. Procédé suivant l'une quelconque des revendications précédentes, **caractérisé en ce que** la superposition temporelle de l'annonce et de l'entrée vocale est enregistrée par un dispositif détecteur (16), auquel le signal d'annonce (An) et le signal d'entrée vocale (Sp) sont amenés, et qui commande un dispositif d'atténuation (18) au moyen d'un signal de détecteur (Dt),
**en ce que** les coefficients d'atténuation (d) sont amenés à un multiplicateur par le dispositif d'atténuation (18), ce multiplicateur multipliant le signal d'annonce (An) par les coefficients d'atténuation (d),
et **en ce que** le dispositif d'annonce (12) est contrôlé par une unité de contrôle (20) commandée par le dispositif d'atténuation (18).

6. Procédé suivant l'une quelconque des revendications précédentes, **caractérisé en ce qu'**un signal de reconnaissance (Er) est amené au dispositif d'atténuation (18) par le dispositif de reconnaissance vocale (14) au cas où le signal d'entrée vocale (Sp) est reconnu.

7. Procédé suivant la revendication 6, **caractérisé en ce que** l'annonce atténuée conformément au deuxième coefficient d'atténuation (d) est interrompue après expiration d'une durée de pause prédéterminée et est poursuivie avec le segment d'annonce précédent lorsque le signal de reconnaissance (Er) n'est pas amené au dispositif d'atténuation (18) pendant la durée de pause prédéterminée.

8. Procédé suivant l'une des revendications 1 à 6, **caractérisé en ce qu'**un signal d'erreur est amené au dispositif d'atténuation (18) au moyen du dispositif de reconnaissance vocale (14) lorsque le signal d'entrée vocale (Sp) est reconnu comme défectueux.

9. Procédé suivant la revendication 8, **caractérisé en ce que** l'annonce atténuée conformément au deuxième coefficient d'atténuation (d) est interrompue et est poursuivie avec le segment d'annonce précédent lorsque le signal d'erreur est amené au dispositif d'atténuation (18).

10. Procédé suivant l'une quelconque des revendications précédentes, **caractérisé en ce que** le premier coefficient d'atténuation (d) est d'environ 12 dB.

11. Procédé suivant l'une quelconque des revendications précédentes, **caractérisé en ce que** le deuxième coefficient d'atténuation (d) est approximativement de grandeur infinie.

12. Procédé suivant l'une quelconque des revendications précédentes, **caractérisé en ce que** l'écoulement de la durée de surveillance est contrôlé par une première minuterie.

13. Procédé suivant l'une des revendications 7, 10, 11 ou 12, **caractérisé en ce que** l'écoulement de la durée de pause est contrôlé par la première minuterie ou par une seconde minuterie.

14. Procédé suivant l'une quelconque des revendications précédentes, **caractérisé en ce que** les coefficients d'atténuation (d) sont filtrés par des filtres passe-bas numériques.

15. Dispositif pour la réalisation du procédé suivant l'une des revendications 1 à 14,
avec un dispositif d'annonce (12) qui crée une annonce sous la forme d'un signal d'annonce numérique (An),
avec un dispositif de reconnaissance vocale (14) qui traite une entrée vocale sous la forme d'un signal numérique d'entrée vocale (Sp),
avec un dispositif détecteur (16) qui enregistre une superposition temporelle de l'annonce et de l'entrée vocale,
et avec un dispositif d'atténuation (18) qui atténue le signal d'annonce (An) au moyen d'un premier coefficient d'atténuation (d) lorsqu'une superposition temporelle de l'annonce et de l'entrée vocale est constatée par le dispositif détecteur (16), l'intensité sonore de l'annonce étant commandée par l'intermédiaire du coefficient d'atténuation appliqué.

16. Dispositif suivant la revendication 15, **caractérisé en ce que** le dispositif d'atténuation (18) supprime l'atténuation du signal d'annonce (An) lorsque la superposition temporelle de l'annonce et de l'entrée vocale est annulée pendant une durée de surveillance prédéterminée.

17. Dispositif suivant la revendication 16, **caractérisé en ce que** le dispositif d'atténuation (18) atténue le signal d'annonce, en cas d'une superposition temporelle continue de l'annonce et de l'entrée vocale après l'expiration de la durée de surveillance prédéterminée, au moyen d'un deuxième coefficient d'atténuation (d) qui est supérieur au premier coefficient d'atténuation.

18. Dispositif suivant la revendication 17, **caractérisé par** une unité de contrôle (20), laquelle amène le dispositif d'annonce (14) à interrompre l'annonce atténuée conformément au deuxième coefficient d'atténuation et à la poursuivre de manière non atténuée avec un segment d'annonce précédent, qui a été annoncé au moyen du dispositif d'annonce avant le début de la superposition temporelle de l'annonce et de l'entrée vocale, lorsque le signal d'entrée vocale (Sp) n'est pas reconnu par le dispositif de reconnaissance vocale (14).

19. Dispositif suivant l'une des revendications 15 à 18, **caractérisé en ce que** le dispositif d'atténuation (18) est lié à un multiplicateur (22) auquel il amène les coefficients d'atténuation (d).

20. Dispositif suivant l'une des revendications 15 à 19, **caractérisé en ce que** l'unité de contrôle (20) comprend une première minuterie.

21. Dispositif suivant la revendication 20, **caractérisé en ce que** l'unité de contrôle (20) comprend une deuxième minuterie.

22. Dispositif suivant l'une des revendications 15 à 21, **caractérisé par** des filtres passe-bas numériques dans le dispositif d'atténuation (18), lesquels filtrent les coefficients d'atténuation (d).
